# EUROPÄISCHE PATENTANMELDUNG

(11) **EP 2 194 011 A2**
(43) Veröffentlichungstag der Anmeldung: **09.06.2010**
(21) Anmeldenummer: 09014915.4
(22) Anmeldetag: 02.12.2009
(51) Int. Cl.: B65G 59/00

(54) **Verfahren und Vorrichtung zum Abnehmen einer Lage von Holzbrettern oder Holzquadern von einem Stapel**

(30) Priorität: 02.12.2008 DE 102008060064
(71) Anmelder: Sicko, Carlo, 75059 Zaisenhausen (DE); Sicko, Jochen, 75059 Zaisenhausen (DE)
(72) Erfinder: Sicko, Carlo, 75059 Zaisenhausen (DE); Sicko, Jochen, 75059 Zaisenhausen (DE)
(74) Vertreter: Twelmeier Mommer & Partner

(57) **Zusammenfassung**

Die Erfindung betrifft ein Verfahren zum Abnehmen einer Lage von Holzbrettern (1) oder Holzquadern von einem Stapel (2), der überein gestapelte Lagen von nebeneinander angeordneten Holzbrettern (1) oder Holzquadern enthält, die durch quer zur Längsrichtung der Bretter (1) bzw. Quader verlaufende Leisten (3) voneinander getrennt sind, wobei eine Lage mit Saugern gegriffen und von dem Stapel (2) abgehoben wird, die Lage von dem Stapel (2) weg bewegt und aus einer horizontalen Stellung in eine schräge Stellung geschwenkt wird, damit auf der aufgenommenen Lage liegende Leisten (3) neben dem Stapel von der Lage herabrutschen oder fallen, und anschließend die aufgenommene Lage abgelegt wird. Die Erfindung betrifft ferner eine entsprechende Vorrichtung.

## Beschreibung

Die Erfindung betrifft ein Verfahren zum Abnehmen einer Lage von Holzbrettern oder Holzquadern von einem Stapel, der übereinander gestapelte Lagen von nebeneinander angeordneten Holzbrettern oder Holzquadern enthält, die durch quer zur Längsrichtung der Bretter bzw. Quader verlaufende Leisten voneinander getrennt sind.

Wenn ein solcher Stapel abgebaut wird und die einzelnen Lagen beispielsweise auf einen Abförderer gelegt werden, müssen Leisten, die sich zwischen einigen, manchmal sogar allen Lagen des Stapels befinden, entfernt werden. Es ist bekannt, hierfür mit einem Rakel oder einer Bürste jeweils über die oberste Lage des Stapels zu fahren und so eventuell darauf vorhandene Leisten herunterzuschieben. Diese Vorgehensweise ist jedoch störanfällig, insbesondere wenn unterschiedlich lange Bretter in dem Stapel vorhanden sind, da eine Rakel oder eine Bürste dort leicht hängen bleiben.

Aufgabe der Erfindung ist es, einen Weg aufzuzeigen, wie Leisten, die sich auf einer Lage eines Stapels aus Holzbrettern oder Holzquadern befinden, leichter entfernt werden können.

Diese Aufgabe wird durch ein Verfahren mit den im Anspruch 1 angegebenen Merkmalen sowie eine Vorrichtung mit den im Anspruch 7 angegebenen Merkmalen gelöst. Vorteilhafte Weiterbildungen der Erfindung sind Gegenstand der Unteransprüche.

Erfindungsgemäß wird jeweils die oberste Lage eines Stapels von Holzbrettern oder Holzquadern mit Saugern gegriffen und von dem Stapel abgehoben. Die Lage wird dann von dem Stapel wegbewegt und aus einer horizontalen Stellung in eine schräge Stellung geschwenkt, damit auf der aufgenommenen Lage liegende Leisten neben dem Stapel von der Lage herabrutschen oder fallen. Erfindungsgemäß wird so die Schwerkraft genutzt, um eventuell auf einer aufgenommenen Lage liegende Leisten zu entfernen.

Bei dem erfindungsgemäßen Verfahren kann die Lage aus einer horizontalen Stellung in eine schräge Stellung geschwenkt und der Schwenkvorgang dann angehalten und rückgängig gemacht werden. Möglich ist es aber auch, dass der Schwenkvorgang fortgesetzt wird, bis die Lage eine senkrechte Stellung erreicht oder sogar um 180° oder mehr geschwenkt wurde. Auch bei einem Schwenken der Lage um 360° wird jedoch während des Schwenkvorgangs zumindest vorübergehend eine schräge Stellung eingenommen, also die Lage aus einer horizontalen Stellung in eine schräge Stellung geschwenkt.

Nach dem Schwenken einer abgenommenen Lage kann diese wieder in eine horizontale Stellung gebracht und beispielsweise auf einen Abförderer gelegt werden.

Nach dem Ansaugen und Abheben einer Lage kann diese bei dem erfindungsgemäßen Verfahren zunächst von dem Stapel wegbewegt und anschließend geschwenkt werden. Bevorzugt wird die Lage jedoch bereits während des Wegbewegens vom Stapel geschwenkt, da sich auf diese Weise schnellere Taktzeiten erreichen lassen.

Bevorzugt wird die Lage so geschwenkt, dass ihre Unterseite von dem Stapel abgewandt wird. Diese Maßnahme hat den Vorteil, das Leisten zwischen dem Stapel und der momentanen Position der Lage zu Boden fallen und dort beispielsweise von einem Sammelbehälter aufgefangen werden können. Auf der in Bewegungsrichtung anderen Seite kann beispielsweise ein Abförderer positioniert sein, auf den dann keine Leisten fallen.

Eine erfindungsgemäße Vorrichtung, die insbesondere zum Durchführen des beschriebenen Verfahrens geeignet ist, hat ein auf einem Gestell hin und her bewegbares Portal, das eine auf und ab bewegbare Traverse hat, an der eine Anordnung von Saugern angebracht ist, um die jeweils oberste Lage eines Stapels zu greifen und von dem Stapel abzuheben. Damit die Lage nach dem Abheben vom Stapel geschwenkt werden kann, so dass auf der aufgenommenen Lage liegende Leisten herabrutschen oder herabfallen können, ist die Anordnung der Sauger um eine zur Traverse parallele Achse schwenkbar.

Bevorzugt sind die Sauger in einer oder in mehreren Reihen angeordnet. Beispielsweise kann an der Traverse eine quer, vorzugsweise senkrecht, zur Traverse verlaufende Saugleiste angebracht sein. Prinzipiell genügt bereits eine einzige solche Saugleiste, um eine Lage von Brettern oder Holzquadern zu greifen und durch Ansaugen von einem Stapel abzuheben. Insbesondere bei längeren Holzbrettern oder Holzquadern kann es jedoch vorteilhaft sein, mehrere Saugleisten nebeneinander, vorzugsweise parallel nebeneinander, vorzusehen.

Weitere Einzelheiten und Vorteile der Erfindung werden an einem Ausführungsbeispiel der Erfindung unter Bezugnahme auf die beigefügten Zeichnungen erläutert. Es zeigen:
- Figur 1: ein Ausführungsbeispiel einer erfindungsgemäßen Vorrichtung mit einer von einem Stapel abgenommenen Lage von Holzbrettern in einer horizontalen Stellung in einer Seitenansicht;
- Figur 2: das in Figur 1 dargestellte Ausführungsbeispiel beim Schwenken der Lage;

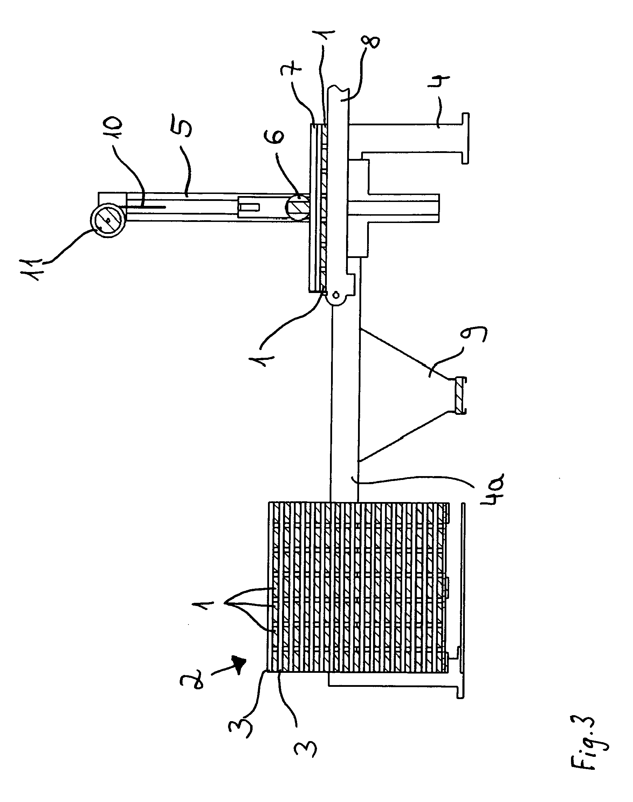

- Figur 3: das Ausführungsbeispiel beim Ablegen der Lage auf einen Abförderer.

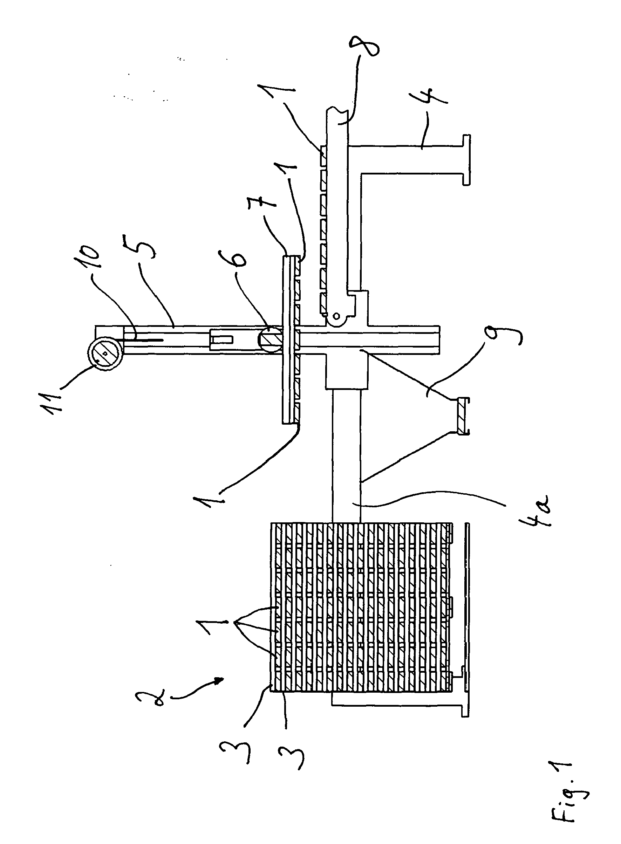

Die in Figur 1 dargestellte Vorrichtung dient zum Abnehmen einer Lage von Holzbrettern 1 oder Holzquadern von einem Stapel 2, der übereinander gestapelte Lagen von nebeneinander angeordneten Holzbrettern 1 oder Holzquadern enthält, die durch quer zur Längsrichtung der Bretter bzw. Quader verlaufende Leisten 3 voneinander getrennt sind. Bei dem in Figur 1 dargestellten Stapel 2 sind alle benachbarten Lagen jeweils durch Leisten 3 voneinander getrennt. Bretter 1 und Holzquader werden jedoch mitunter auch in Stapeln angeliefert, bei denen nur einige Lagen durch quer zur Längsrichtung der Bretter bzw. Quader verlaufende Leisten 3 voneinander getrennt sind.

Die in Figur 1 dargestellte Vorrichtung hat ein Gestell 4 mit zwei parallel verlaufenden Schienen 4a. Auf dem Gestell 4 ist ein Portal 5 horizontal hin und her bewegbar, das eine auf und ab bewegbare Traverse 6 hat. An der Traverse 6 ist eine Anordnung 7 von Saugern angebracht, beispielsweise in Form einer Saugleiste. Mit der Saugeranordnung 7 kann eine Lage von Brettern 1 oder Holzquadern durch Ansaugen gegriffen und von dem Stapel abgehoben werden.

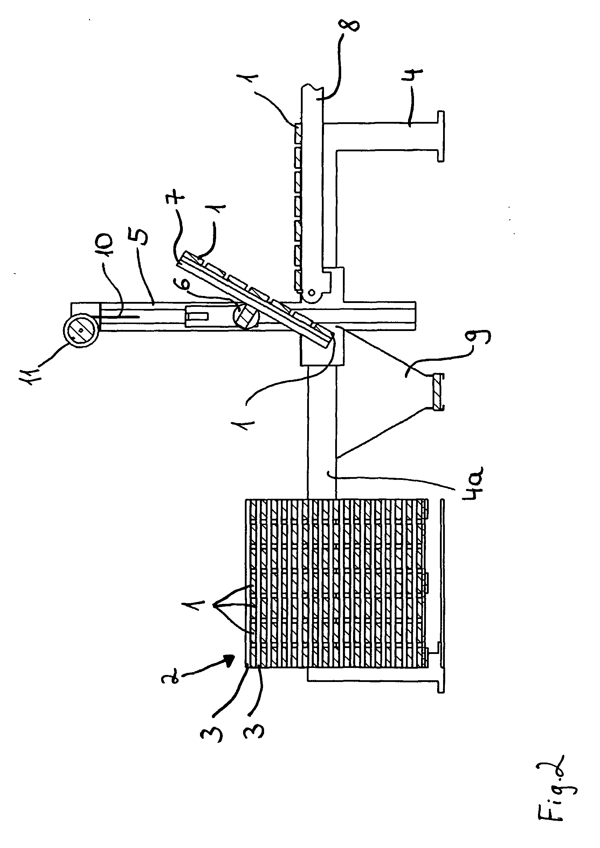

Wie Figur 2 zeigt, ist die Anordnung 7 der Sauger um eine zur Traverse 6 parallele Achse schwenkbar. Auf diese Weise kann eine gegriffene Lage aus der in Figur 1 gezeigten horizontalen Stellung in eine in Figur 2 gezeigte schräge Stellung geschwenkt werden, so dass eventuell auf der Bretterlage liegende Leisten 3 herunterrutschen oder herunterfallen. Bevorzugt wird die Saugeranordnung 7 um einen Winkel von mindestens 45°, vorzugsweise mindestens 60°, insbesondere mindestens 70°, geschwenkt.

Bei dem dargestellten Ausführungsbeispiel verläuft die geometrische Schwenkachse, um welche die Saugeranordnung 7 schwenkbar ist, innerhalb der Traverse 6. Nachdem eventuell auf einer Lage liegende Leisten 3 heruntergerutscht oder heruntergefallen sind, kann eine aufgenommene Lage wieder in eine horizontale Stellung zurückgeschwenkt und auf einen Abförderer 8 abgelegt werden.

Zum Auffangen der Leisten 3 ist neben dem Stapel 2 ein Sammelbehälter 9 angeordnet, der quer zur Bewegungsrichtung des Portals 5 verschiebbar ist. Der Sammelbehälter 9 ist bevorzugt so bemessen, dass er unter dem Gestell 4 hindurch schiebbar ist, so dass eine einfache Entleerung des Behälters 9 möglich ist.

Die Traverse 6 ist bei dem dargestellten Ausführungsbeispiel mit einem oder mehreren, vorzugsweise mit zwei, aufwickelbaren Strängen 10 an einer angetriebenen Welle 11 aufgehängt, die bei Drehung durch auf- und abwickeln des Strangs oder der Stränge 10 eine vertikale Bewegung der Traverse 6 bewirkt. Als aufwickelbarer Strang 10 kann beispielsweise ein Seil, ein Gurt oder eine Kette verwendet werden. Die Welle 11 erstreckt sich parallel zur Traverse 6 des Portals 5 und wird von den beiden an dem Gestell 4 beweglichen Stützen des Portals 5 getragen.

Das sich überwiegend oberhalb des Gestells 4 erstreckende Portal 5 kann beispielsweise mit einem Riemenantrieb, vorzugsweise einem Zahnriemenantrieb, an dem Gestell 4 hin und her bewegt werden.

### Bezugszahlen

- 1: Holzbretter
- 2: Stapel
- 3: Leisten
- 4: Gestell
- 4a: Schienen
- 5: Portal
- 6: Traverse
- 7: Saugeranordnung
- 8: Abförderer
- 9: Sammelbehälter
- 10: Strang
- 11: Welle

## Patentansprüche

1. Verfahren zum Abnehmen einer Lage von Holzbrettern (1) oder Holzquadern von einem Stapel (2), der überein gestapelte Lagen von nebeneinander angeordneten Holzbrettern (1) oder Holzquadern enthält, die durch quer zur Längsrichtung der Bretter (1) bzw. Quader verlaufende Leisten (3) voneinander getrennt sind, wobei eine Lage mit Saugern gegriffen und von dem Stapel (2) abgehoben wird,
die Lage von dem Stapel (2) weg bewegt und aus einer horizontalen Stellung in eine schräge Stellung geschwenkt wird, damit auf der aufgenommenen Lage liegende Leisten (3) neben dem Stapel von der Lage herabrutschen oder fallen, und anschließend die aufgenommene Lage abgelegt wird.

2. Verfahren nach Anspruch 1 **dadurch gekennzeichnet, dass** die Lage auf einen Abförderer (8) abgelegt wird.

3. Verfahren nach einem der vorstehenden Ansprüche **dadurch gekennzeichnet, dass** die Lage während des Wegbewegens vom Stapel (2) geschwenkt wird.

4. Verfahren nach einem der vorstehenden Ansprüche **dadurch gekennzeichnet, dass** die Lage so geschwenkt wird, dass die Unterseite der Lage von dem Stapel (2) abgewandt wird.

5. Verfahren nach einem der vorstehenden Ansprüche **dadurch gekennzeichnet, dass** die Lage vor dem Ablegen wieder zurück in eine horizontale Stellung geschwenkt wird.

6. Vorrichtung zum Abnehmen einer Lage von Holzbrettern (1) oder Holzquadern von einem Stapel (2), der übereinander gestapelte Lagen von nebeneinander angeordneten Holzbrettern (1) oder Holzquadern enthält, die durch quer zur Längsrichtung der Bretter (1) bzw. Quader verlaufende Leisten (3) voneinander getrennt sind, insbesondere zum Durchführen des Verfahrens nach einem der vorstehenden Ansprüche, mit
einem Gestell (4)
einem auf dem Gestell (4) hin und her bewegbaren Portal (5), das eine auf und ab bewegbare Traverse (6) hat,
einer an der Traverse (6) angebrachten Anordnung (7) von Saugern, um eine Lage zu greifen und von dem Stapel (2) abzuheben,
wobei die Anordnung (7) der Sauger um eine zur Traverse (6) parallele Achse schwenkbar ist.

7. Vorrichtung nach Anspruch 6 **dadurch gekennzeichnet, dass** die Sauger in einer oder mehreren Reihen angeordnet sind.

8. Vorrichtung nach Anspruch 6 oder 7 **dadurch gekennzeichnet, dass** die Anordnung (7) der Sauger von einer oder mehreren Saugleisten gebildet ist.

9. Vorrichtung nach einem der Ansprüche 6 bis 8 **dadurch gekennzeichnet, dass** sich das Portal (5) überwiegend oberhalb des Gestells (4) erstreckt.

10. Vorrichtung nach einem der Ansprüche 6 bis 8 **gekennzeichnet durch** einen Sammelbehälter (9) zum Auffangen der Leisten (3).

11. Vorrichtung nach Anspruch 10 **dadurch gekennzeichnet, dass** der Behälter (9) quer zur Bewegungsrichtung des Portals (5) verschiebbar ist.

12. Vorrichtung nach Anspruch 10 oder 11 **dadurch gekennzeichnet, dass** der Behälter (9) unter dem Gestell (4) hindurch schiebbar ist.

13. Vorrichtung nach einem der Ansprüche 6 bis 12, **dadurch gekennzeichnet, dass** die Anordnung (7) der Sauger um einen Winkel von mindestens 45°, vorzugsweise mindestens 60°, insbesondere mindestens 70° schwenkbar ist.

14. Vorrichtung nach einem der Ansprüche 6 bis 13, **dadurch gekennzeichnet, dass** die Lage um eine in der Traverse (6) verlaufende Achse schwenkbar ist.

15. Vorrichtung nach einem der Ansprüche 6 bis 14, **dadurch gekennzeichnet, dass** die Traverse (6) mit einem oder mehreren aufwickelbaren Strängen (10) an einer Welle (11) aufgehängt ist, die bei Drehung durch Auf- und Abwickeln des mindestens einen Strangs (10) eine vertikale Bewegung der Traverse (6) bewirkt.
